# DEMANDE DE BREVET EUROPEEN

(11) **EP 2 218 644 A1**
(43) Date de publication de la demande: **18.08.2010**
(21) Numéro de dépôt: 10001466.1
(22) Date de dépôt: 12.02.2010
(51) Int. Cl.: B65B 1/22, B65B 3/06, B65B 25/04, B65B 43/59, B65B 51/22, B65D 85/34, B29C 65/00, B67C 3/22

(54) **Procédé de conditionnement de fruits dans un jus, dispositif permettant de le mettre en oeuvre et emballages ainsi obtenus**

(30) Priorité: 12.02.2009 FR 0950875
(71) Demandeur: COOPEX APIFRUIT, 82000 Montauban (FR)
(72) Inventeur: Roux, Jean-Paul, 82290 Lacourt Saint Pierre (FR)
(74) Mandataire: Richebourg, Michel François

(57) **Abrégé**

L'invention concerne un procédé de conditionnement de denrées périssables tels des fruits (F) dans des contenants souples (C) à fermer par soudure, lesdits contenants étant préalablement remplis de fruits (F) et de jus (J) par une extrémité laissée ouverte dont les rebords doivent être soudés, remarquable en ce qu'il consiste à mettre sous pression les parois dudit contenant (E) de sorte que le jus (J) soit présent au-delà des bords du contenant (E) devant être soudés lors de l'opération de soudure et de façon à réduire l'encombrement des morceaux contenus à l'intérieur du contenant soupe à des fins de réduction du volume de jus.

L'invention concerne également le dispositif permettant de mettre en oeuvre le procédé ainsi que les emballages ainsi obtenus.

Applications : conditionnement de fruits dans du jus

## Description

### DOMAINE D'APPLICATION DE L'INVENTION

La présente invention a trait au domaine du conditionnement des fruits dans un liquide tel un jus et notamment aux adaptations permettant leur emballage dans des contenants souples dans les meilleures conditions.

### DESCRIPTION DE L'ART ANTÉRIEUR

Pour l'emballage de denrées périssables tels les fruits, il existe traditionnellement dans l'art antérieur, le conditionnement dans des boîtes métalliques qui présente plusieurs inconvénients et parmi ceux-ci :
- la proportion de jus par rapport aux fruits est quasiment de moitié ce qui augmente le volume des effluents,
- la boîte est rigide et volumineuse ce qui la rend difficile à stocker et à recycler une fois vidée,
- la création d'arêtes tranchantes lors de l'ouverture,
- la possibilité de création de limailles métalliques lors de l'ouverture,
- etc...

Une alternative réside dans le conditionnement sous vide dans des contenants souples qui résout la plupart des inconvénients cités ci-dessus mais en présente d'autres à savoir :
- la technologie de soudure sous vide est complexe et est susceptible d'être la cause de pertes,
- le fruit est soumis à une forte contrainte du fait de la mise sous vide,
- le fruit n'est plus protégé par une enveloppe rigide,
- etc...

Le conditionnement des fruits présente en effet plusieurs critères qui nécessitent d'être pris en compte. Parmi ces critères, réside le fait que le fruit peut se présenter sous une forme de découpe particulière (comme les oreillons, les quartiers, forme entière, etc...) qui doit être respectée et qui définit un volume important et non compressible.

Or, bien qu'il existe d'autres technologies de soudure, ces dernières et les procédés de conditionnement de denrées qui y sont associés ne tiennent pas compte de ces spécificités.

Ainsi par exemple le document EP 1 338 511 propose un procédé de conditionnement de denrées dans des contenants souples à fermer par soudure, lesdits contenants étant préalablement remplis d'un liquide par une extrémité laissée ouverte dont les rebords doivent être soudés consistant à souder à travers le liquide de sorte qu'i soit présent au-delà des bords du contenant devant être soudés lors de l'opération de soudure.

Néanmoins, ce document ne décrit pas comment garantir que le liquide sera présent au niveau de la ligne de soudure ou que le liquide est susceptible de contenir des éléments dont l'intégrité doit être respectée et susceptibles de gêner toute manipulation du contenant. Au delà de cette problématique qui doit garantir l'absence d'air dans le contenu, la problématique que cherche à solutionner la demanderesse réside dans le volume trop important dudit jus en rapport avec le volume des fruits.

### DESCRIPTION DE L'INVENTION

Partant de cet état de fait, la demanderesse a mené des recherches visant à apporter une solution aux inconvénients précités.

Ces recherches ont abouti à la conception d'un procédé de conditionnement de denrées périssables tels des fruits.

Selon l'invention, le procédé de conditionnement de fruits dans du jus dans des contenants souples à fermer par soudure, lesdits contenants étant préalablement remplis de fruits et de jus par une extrémité laissée ouverte dont les rebords doivent être soudés, est remarquable en ce qu'il consiste à mettre sous pression les parois dudit contenant de sorte que le jus soit présent au-delà des bords du contenant devant être soudés lors de l'opération de soudure et de façon à réduire l'encombrement des morceaux contenus à l'intérieur du contenant soupe à des fins de réduction du volume de jus.

Cette caractéristique de soudure dans le jus garantit l'absence d'air dans le contenant. Elle permet de garder les fruits dans une atmosphère liquide protectrice sans utilisation du vide et tout en protégeant le fruit. En effet, la difficulté rencontrée dans un conditionnement de denrées tels des fruits dans les contenants souples réside dans le fait de garantir l'absence d'air dans le contenant. Cette difficulté est résolue par le procédé de l'invention qui propose de presser les parois du contenant souple avant soudure afin de faire remonter le jus et garantir ainsi la présence de jus sur la ligne de soudure, présence qui induit que le contenant ne contient plus d'air.

Un tel procédé nécessite des aménagements en ce qui concerne la proportion de jus par rapport à celle des fruits. En effet, bien que la présence de jus soit nécessaire pour garantir l'absence d'air ainsi que pour la protection du fruit emballé, son volume doit être réduit au maximum notamment en regard des proportions connues dans le conditionnement en boîtes traditionnelles.

Pour ce faire, la demanderesse a imaginé dans le procédé de conditionnement des phases où le volume du contenant rempli de fruit et de jus est soumis à des opérations d'arrangement des fruits.

Ainsi, la mise en pression des parois du contenant n'a pas pour seul objet la remontée du liquide à des fins de garantir un soudage dans le jus mais a également pour fonction un arrangement des fruits découpés présents dans le contenant, arrangement qui autorise une évacuation optimisée du jus inutile.

Ces opérations d'arrangement sont des étapes du procédé à mettre en oeuvre associées ou non et consistent :
- à remuer le contenu du contenant venant d'être rempli de fruits,
- à exercer une pression progressive par étapes sur les parois du contenant venant d'être rempli et avant soudure,
- à faire vibrer le contenant venant d'être rempli et avant soudure,
- à pincer l'extrémité du contenant de sorte que d'une part, le jus soumis à la pression puisse s'échapper (et permettre ainsi la garantie de la présence de jus au niveau de la ligne soudure) et d'autre part, que les fruits également soumis à la pression soient retenus,
- à aspirer le jus s'échappant de l'extrémité ouverture du contenant avant soudure.

Ces opérations d'arrangement ont également pour avantage de chasser toute bulle d'air du contenant ou tout interstice susceptible de conduire à la création d'une bulle d'air.

Comme expliquée plus haut, la phase de pressage lors de l'opération de soudure provoque la remontée du jus, et ainsi la garantie de sa présence au niveau de la ligne de soudure et la retenue des fruits. Néanmoins, comme rappelée plus haut, cette phase de pressage a pour autre but l'arrangement des fruits, arrangement optimisé par les vibrations. La seule mise en pression pourrait avoir pour conséquence un écrasement des morceaux de fruit mal positionnés. Les arrêts successifs associés à la vibration permettent une disposition de ces derniers évitant une compression des fruits susceptible de les endommager.

Tout ou partie de ces caractéristiques permet de mettre en oeuvre un procédé de conditionnement de denrées périssables tels des fruits dans des contenants souples garantissant une soudure dans le jus du contenant et sans une trop grande proportion de jus par rapport à celle des fruits. Une proportion de 10 à 30 % est optimalement recherchée alors que la proportion classique proposée par l'art antérieur dédié au conditionnement des fruits dans du jus, avoisine les 50 %.

L'invention concerne également le dispositif permettant de mettre en oeuvre le procédé ci-dessus décrit et qui est susceptible de présenter associées ou non les caractéristiques suivantes :
- il comprend un berceau dans lequel vient être disposée la partie basse dudit contenant, ledit berceau étant associé à un moyen de mise en mouvement permettant d'assurer un mouvement de va-et-vient au berceau et donc au contenant et à son contenu,
- il comprend un premier jeu de deux parois se rapprochant l'une par rapport à l'autre et entre lesquelles est disposé le contenant, au moins la paroi mobile étant équipée d'un moyen de production de vibrations,
- il comprend, en aval du premier, un deuxième jeu de deux parois se rapprochant l'une par rapport à l'autre et entre lesquelles est disposé le contenant venant d'être pressé avec son contenu arrangé, au moins la paroi mobile étant équipée d'un moyen de production de vibrations, l'écartement de départ de ce deuxième jeu de parois correspondant sensiblement (écart légèrement plus grand pour faciliter le passage) à l'écartement final du premier jeu de parois,
- lesdites parois sont latérales et consistent en des surfaces planes venant s'appuyer sur les parois latérales du contenant,
- la progression desdites parois est réalisée par étapes (arrêts successifs) et sans retour jusqu'à la soudure finale,
- la soudure est réalisée thermiquement,
- la soudure est réalisée par ultrasons.

La mise en oeuvre d'une soudure par ultrasons dans du liquide chargé tel le jus contenant ces morceaux de fruits, a fait l'objet d'une recherche particulière. En effet, alors que classiquement une soudure par ultrasons est réalisée sur une ligne, celle proposée définit une bande soudée. Cette bande est réalisée par une ligne de soudure initiale classique qui va repousser la matière de part et d'autre de la ligne initiale dont les rebords vont faire l'objet également d'une ligne de soudure et ainsi de suite jusqu'à l'obtention d'une bande soudée de part et d'autre de laquelle a été repoussée le jus. Selon un mode de réalisation préféré, la soudure plate obtenue présente une largueur égale à 4 millimètres environ.

L'invention concerne également l'emballage ou le contenant obtenu selon le procédé et qui est remarquable en ce qu'il est souple soit opaque formé d'un complexe polymères-aluminium et présentant des soudures plates soit transparent formé d'un complexe multicouche de polymères et présentant des soudures plates.

Selon une autre caractéristique de l'invention, la feuille de matériau utilisée pour un contenant opaque comprend les couches suivantes :
- extérieure de polyester,
- intermédiaire en aluminium ou matériau équivalent,
- intérieure de polyéthylène.

Selon une autre caractéristique de l'invention, la feuille de matériau utilisée pour un contenant transparent comprend les couches suivantes :
- extérieure de polyamide,
- intermédiaire de polypropylène,
- intérieure de polyéthylène.

L'utilisation de tel matériau permet la réalisation d'un soudure par ultrasons ne dépassant pas 170 degrés Celcius là où l'art antérieur avoisine les deux cent trente degrés Celcius. Cette caractéristique contribue à éviter la vaporisation du liquide dans le voisinage de la surface soudée, vaporisation gênante pour une bonne soudure.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé et d'un dispositif de conditionnement et d'un emballage ainsi obtenu conformes à l'invention.

### BRÈVE DESCRIPTION DES DESSINS

La figure 1 est un dessin schématique d'une chaîne de conditionnement susceptible de mettre en oeuvre du procédé de l'invention,
La figure 2 est un dessin schématique d'une vue en coupe du poste de remplissage de jus des contenants,
La figure 3 est un dessin schématique d'une vue en coupe du poste de remplissage par des fruits des contenants,
La figure 4 illustre la situation des fruits dans les contenants,
La figure 5 illustre l'opération de remuage des fruits,
La figure 6 est un dessin schématique d'une vue en coupe du poste d'arrangement par pressage et vibration,
La figure 7 est un dessin schématique d'une vue en coupe du poste de soudure finale,
La figure 8 est un dessin schématique d'une vue en coupe de l'extrémité ouverte du contenant dans le poste de soudage avant soudure,
La figure 9 est un dessin schématique d'une vue en coupe de l'extrémité fermée du contenant dans le poste de soudage après soudure,
La figure 10 est un dessin schématique d'une vue en perspective extérieure d'un emballage tel qu'obtenu par le procédé et le dispositif de l'invention.

### DESCRIPTION DES MODES DE RÉALISATION PRÉFÉRÉS

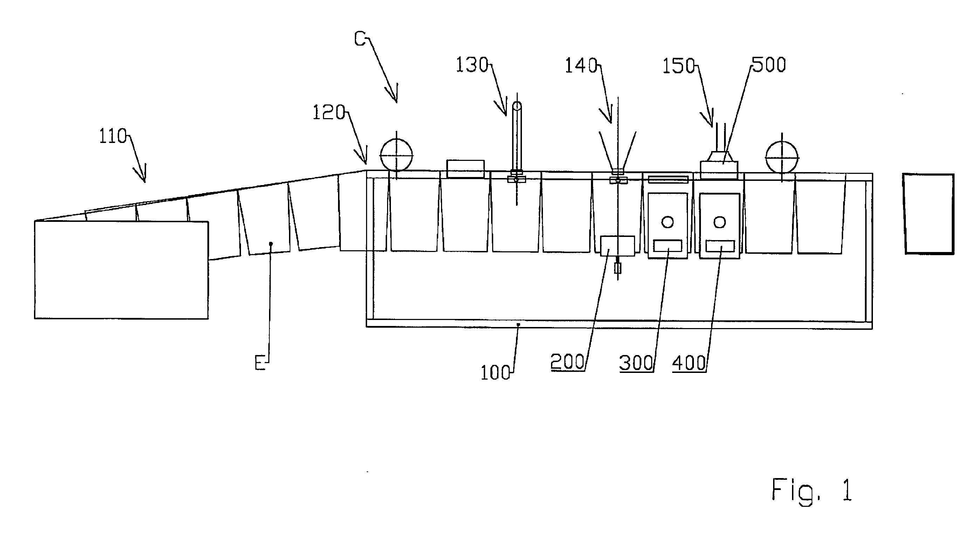

Le mode de réalisation de la chaîne de conditionnement illustrée sur le dessin de la figure 1 est référencé C dans son ensemble.

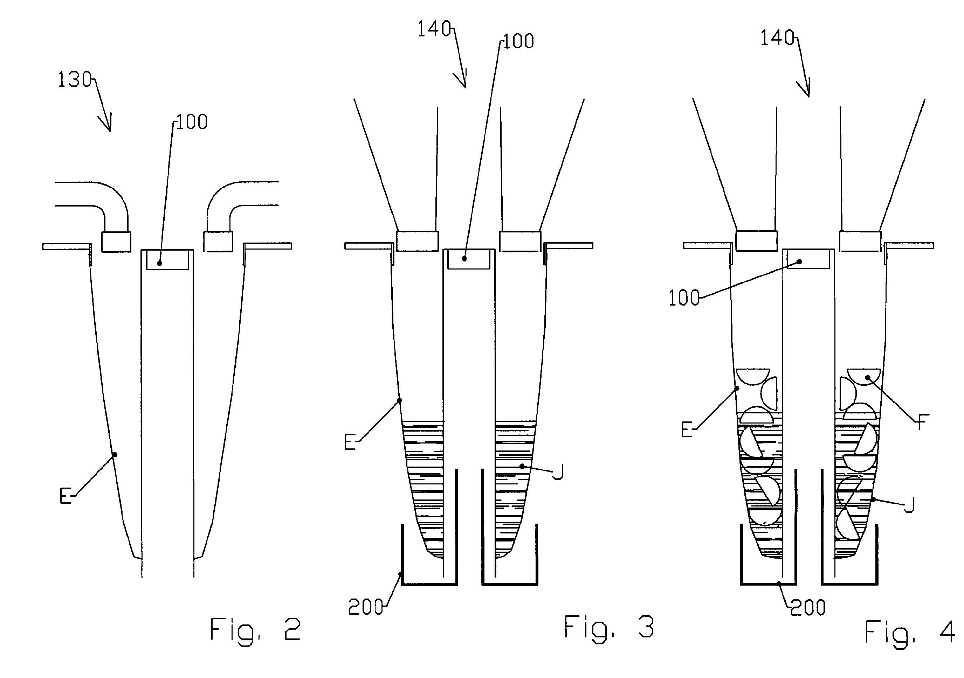

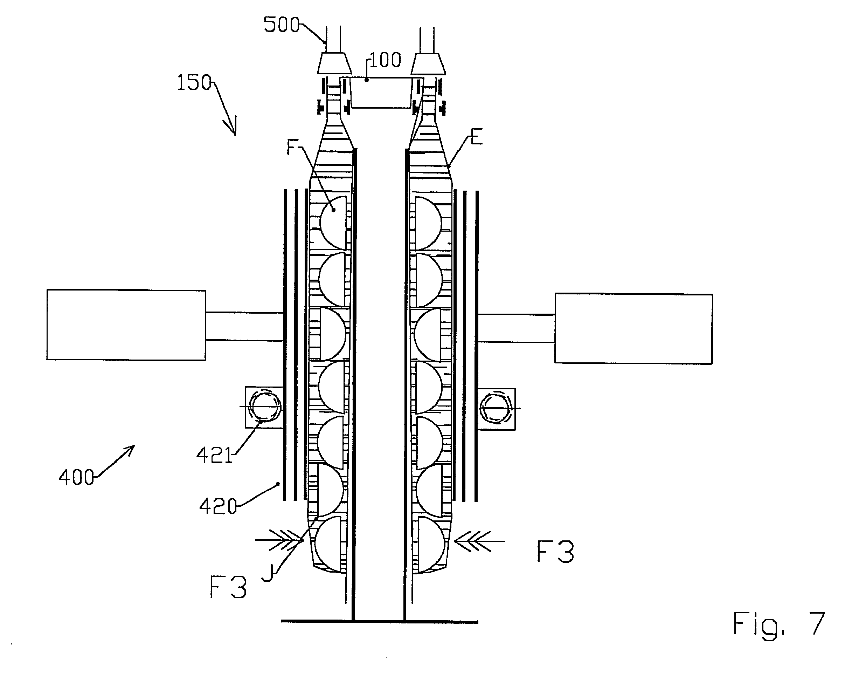

Cette chaîne comprend, disposés sur un même châssis 100, différents postes permettant de mettre en oeuvre les phases d'un procédé de conditionnement classique :
- poste 110 de fourniture de contenants ou emballages E vides par paire,
- poste de découpe des ouvertures 120,
- poste 130 de mise en position verticale, d'ouverture des extrémités hautes, comme illustré par le dessin de la figure 2, et de remplissage par une quantité dosée de jus J de fruit (cf. figure 3),
- poste 140 d'ouverture et de remplissage par une quantité dosée de fruits F comme illustré sur le dessin de la figure 4,
- poste 150 de fermeture par soudage comme illustré sur le dessin de la figure 7.

Cette chaîne de conditionnement C met en oeuvre le procédé de l'invention et est remarquable en ce qu'elle comprend en outre :
- des moyens d'arrangement des fruits 200 associés au poste de remplissage par les fruits 140,
- des moyens de pressage et de rangement 300 des parois du contenant E s'intercalant entre le poste de remplissage des fruits 140 et le poste de soudage 150,
- des moyens additionnels de pressage et de rangement 400 des parois du contenant E associé au poste de soudage 150,
- des moyens d'aspiration 500 du jus de fruits associé audit poste de soudage 150.

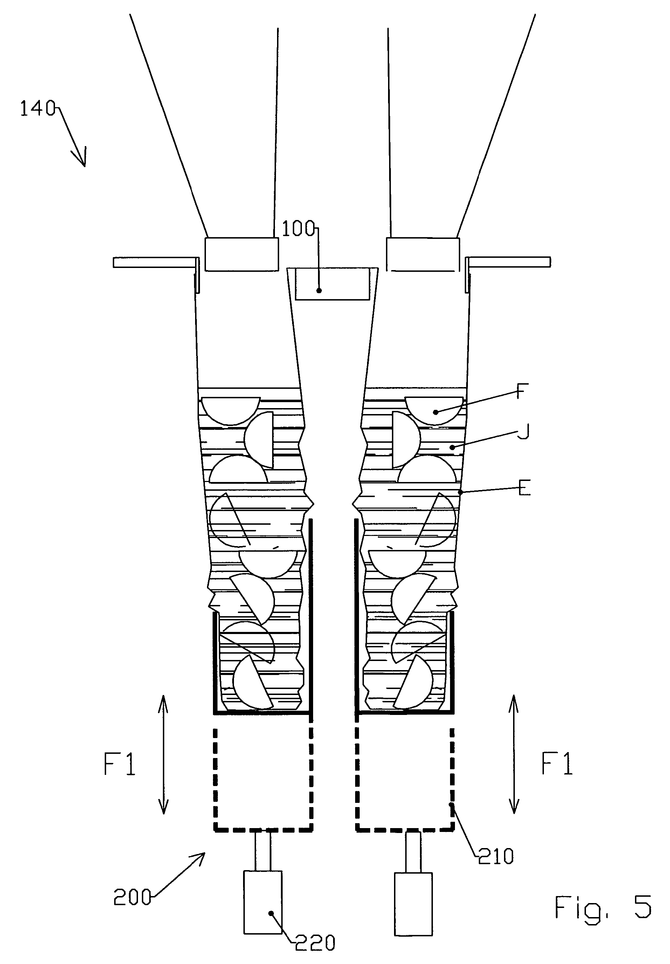

Les moyens d'arrangement 200 illustrés sur les dessins des figures 3, 4 et 5, sont constitués, pour chaque contenant E, par un berceau 210 dans lequel vient être disposée la partie basse dudit contenant E, ledit berceau 210 étant associé à un moyen de mise en mouvement en translation 220 permettant d'assurer un mouvement de va-et-vient selon la double flèche F1 du haut vers le bas et vice-versa, au berceau 210 et donc au contenant et à son contenu composé de fruits F et de jus de fruit J. Ce déplacement du bas du contenant E par rapport à son extrémité haute est notamment rendu possible par le fait que ledit contenant E est souple.

Selon un mode de réalisation préféré, les berceaux 210 sont disposés au niveau du poste de remplissage par des fruits 140.

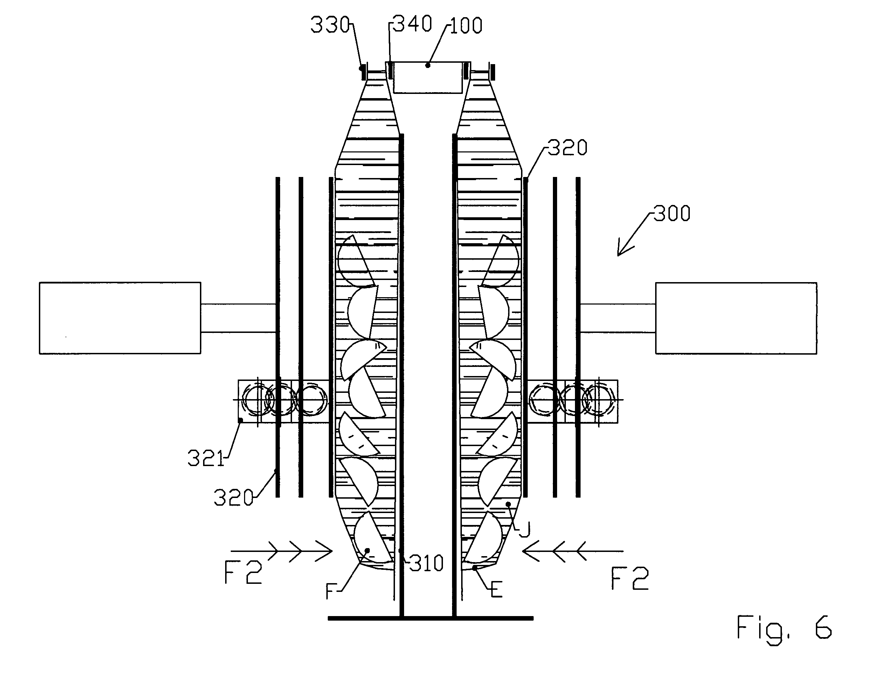

Un mode de réalisation des moyens de pressage et de rangement 300 est illustré sur le dessin de la figure 6. Ces moyens de pressage comprennent, pour chaque contenant, un jeu d'au moins deux plaques de pressage 310 et 320 se rapprochant l'une par rapport à l'autre et entre lesquelles est disposé le contenant E. Ici, la plaque 310 est fixe alors que la plaque 320 est mise en mouvement en translation vers la plaque fixe à des fins de pressage latéral sur les parois du contenant E selon les flèches F2. Selon un mode de réalisation préféré, ces plaques sont dimensionnées pour venir en contact avec le plus de surface possible des parois du contenant.

Une des plaques 320 est avantageusement équipée d'un moyen de production de vibrations 321. Ces vibrations participent à une meilleure disposition des fruits dans le contenant E.

Comme illustré, le procédé de travail de ce poste consiste à exercer une pression progressive sur les parois du contenant E. Comme illustrée, cette progression consiste en une série d'arrêts du mouvement de translation, arrêts sans retour en position initiale. Ces arrêts associés à la production de vibration permet l'arrangement des morceaux de fruits.

La plaque mobile 320 va ainsi progressivement se rapprocher de la plaque fixe 310 en marquant une pluralité d'arrêts permettant aux fruits de se disposer au mieux à l'intérieur du contenant. Cet arrangement par étape est optimisé par la présence des vibrations.
Afin d'autoriser ce pressage et que le jus ne constitue pas un obstacle dans cette opération, le procédé de travail de ce poste consiste à pincer l'extrémité haute du contenant E au moyen de mâchoires 330 et 340 de sorte que le jus J soumis à la pression puisse s'échapper vers le haut d'une part, et que les fruits F également soumis à la pression soient retenus à l'intérieur du contenant E d'autre part.

Le pressage est ensuite relâché pour permettre le déplacement du contenant E vers le poste de soudure illustré sur les dessins des figures 7, 8 et 9.

Ce poste de soudure comprend, comme pour le poste précédent, des moyens de pressage 400 comprenant une plaque fixe 410 en regard d'une plaque mobile 420 venant presser progressivement par une succession d'arrêts, les parois du contenant E. La plaque de pressage 420 est associée à un moyen de production de vibrations 421. Ce pressage selon les flèches F3 se termine plus loin que le pressage précédent. En outre, conformément à l'invention, l'écartement de départ de ces plaques correspond sensiblement à l'écartement final du premier jeu de plaques (poste 300) afin de reprendre l'épaisseur et le rangement déjà adoptés sans possibilité d'une libération des morceaux déjà arrangés. De plus, l'opération de soudure est réalisée dans la position de pressage maximal. Comme pour le poste précédent, un pinçage est réalisé en extrémité haute pour permettre le circulation du jus et éventuellement son évacuation mais pour retenir également les fruits.

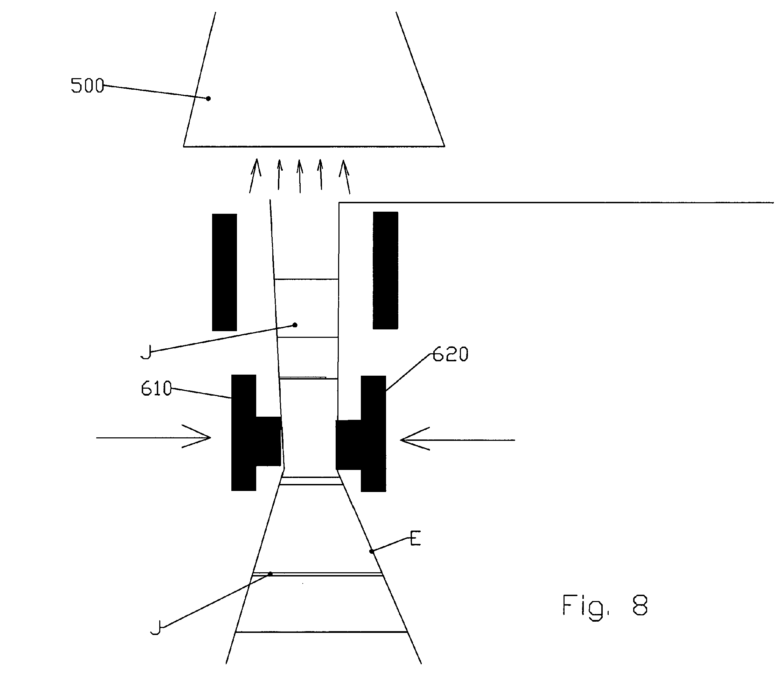

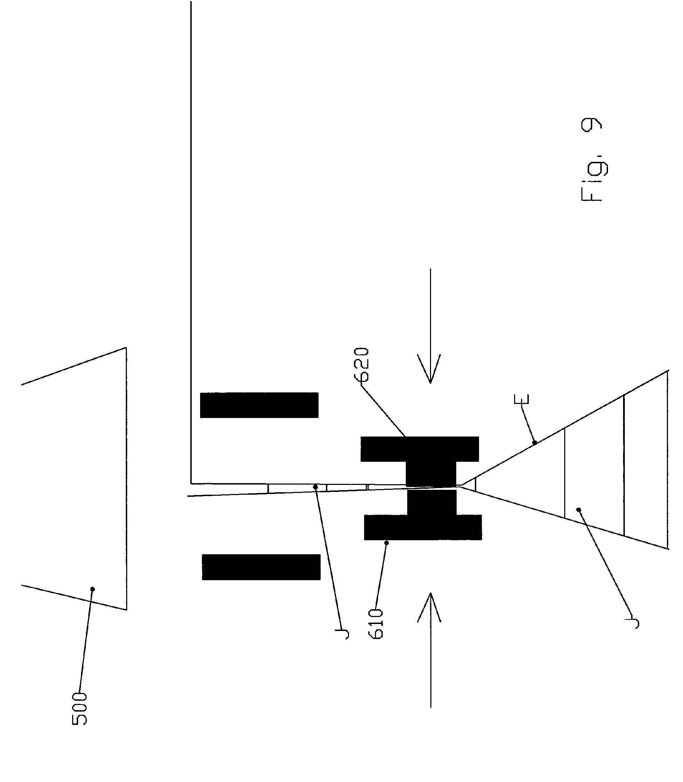

Conformément à l'invention et comme illustrés sur les dessins des figures 8 et 9, les volumes du contenant et du contenu associé à l'opération de pressage sont définis de sorte que le niveau du jus contenu remonte au-delà du niveau de la ligne de soudure définie par les barres de soudures 610 et 620. Ainsi, comme illustrée, la soudure est réalisée alors que du jus est présent de part et d'autre de la ligne horizontale de soudure.

Un moyen d'aspiration 500 est associé à cette opération afin d'évacuer le jus de fruits excédentaire.

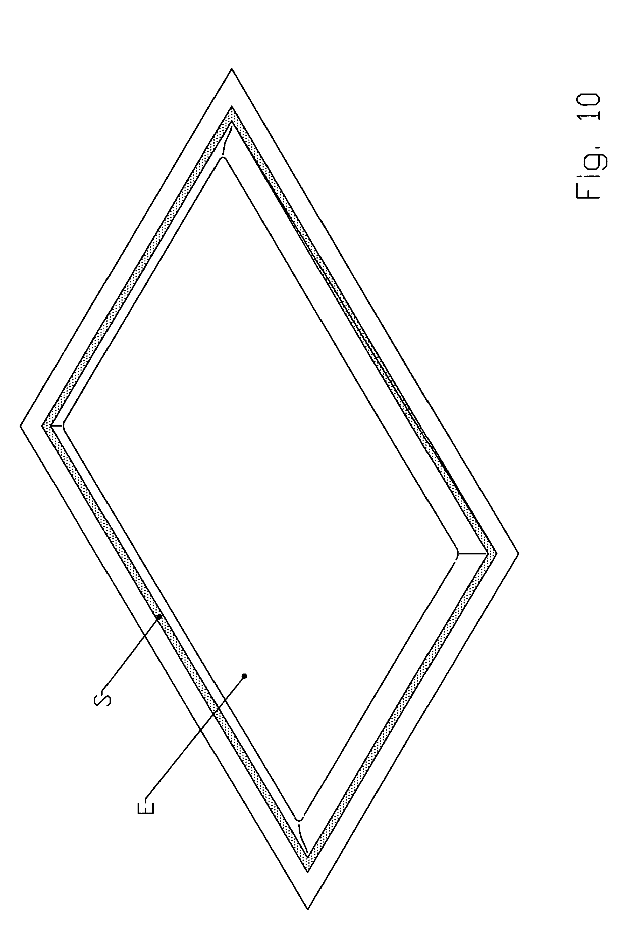

Le résultat obtenu en fin de chaîne est illustré par le contenant E de la figure 10 qui est souple, opaque formé d'un complexe polymères-aluminium et présente des soudures S plates.

On comprend que le procédé, le dispositif et l'emballage obtenu, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de conditionnement de denrées périssables tels des fruits (F) dans des contenants souples (C) à fermer par soudure, lesdits contenants étant préalablement remplis de fruits (F) et de jus (J) par une extrémité laissée ouverte dont les rebords doivent être soudés, **CARACTÉRISÉ EN CE QU**'il consiste à mettre sous pression les parois dudit contenant (E) de sorte que le jus (J) soit présent au-delà des bords du contenant (E) devant être soudés lors de l'opération de soudure et de façon à réduire l'encombrement des morceaux contenus à l'intérieur du contenant soupe à des fins de réduction du volume de jus.

2. Procédé selon la revendication 1, **CARACTÉRISÉ en ce qu**'il consiste à remuer le contenu du contenant (E) venant d'être rempli de fruits.

3. Procédé selon la revendication 1, **CARACTÉRISÉ EN CE QU**'il consiste à exercer une pression progressive par étapes sur les parois du contenant (E).

4. Procédé selon la revendication 1, **CARACTÉRISÉ EN CE QU**'il consiste à faire vibrer le contenant (E).

5. Procédé selon la revendication 3, **CARACTÉRISÉ PAR LE FAIT QU'**il consiste à pincer l'extrémité du contenant (E) de sorte que d'une part le jus (J) soumis à la pression puisse s'échapper et d'autre part que les fruits (F) également soumis à la pression soient retenus.

6. Procédé selon la revendication 1, **CARACTÉRISE EN CE QU**'il consiste à aspirer le jus (J) s'échappant de l'extrémité ouverture du contenant (E) avant soudure.

7. Dispositif permettant de mettre en oeuvre le procédé selon la revendication 2, où le procédé de conditionnement de fruits (F) dans des contenants souples (E) à fermer par soudure, lesdits contenants (E) étant préalablement remplis de fruits (F) et de jus (J) par une extrémité laissée ouverte dont les rebords doivent être soudés, consiste à mettre sous pression les parois dudit contenant (E) de sorte que le jus (J) soit présent au-delà des bords du contenant (E) devant être soudés lors de l'opération de soudure, et à remuer le contenu du contenant (E) venant d'être remplis de fruits (F), **CARACTÉRISÉ PAR LE FAIT QU'**il comprend un berceau (210) dans lequel vient être disposée la partie basse dudit contenant (E), ledit berceau (210) étant associé à un moyen de mise en mouvement (220) permettant d'assurer un mouvement de va-et-vient au berceau (210) et donc au contenant (E) et à son contenu.

8. Dispositif permettant de mettre en oeuvre le procédé selon la revendication 3, **CARACTÉRISÉ PAR LE FAIT QU'**il comprend un premier jeu de deux parois (310 et 320) se rapprochant l'une par rapport à l'autre et entre lesquelles est disposé le contenant (E); au moins la paroi mobile (320) étant équipée d'un moyen de production de vibrations (321).

9. Dispositif permettant de mettre en oeuvre le procédé selon la revendication 8, **CARACTÉRISÉ PAR LE FAIT QU'**il comprend un deuxième jeu de deux parois (410 et 420) disposé en aval du premier, les deux parois se rapprochant l'une par rapport à l'autre et entre lesquelles est disposé le contenant (E) venant d'être pressé avec son contenu arrangé, au moins la paroi mobile (420) étant équipée d'un moyen de production de vibrations (421), l'écartement de départ de ce deuxième jeu de parois correspondant sensiblement à l'écartement final du premier jeu de parois.

10. Dispositif permettant de mettre en oeuvre le procédé selon la revendication 1, où le procédé de conditionnement de fruits (F) dans des contenants souples (E) à fermer par soudure, lesdits contenants (E) étant préalablement remplis de fruits (F) et de jus (J) par une extrémité laissée ouverte dont les rebords doivent être soudés, consiste à mettre sous pression les parois dudit contenant (E) de sorte que le jus (J) soit présent au-delà des bords du contenant (E) devant être soudés lors de l'opération de soudure, **CARACTÉRISÉ PAR LE FAIT QUE** la soudure (S) est réalisée par ultrasons.

11. Emballage (E) obtenu selon le procédé décrit dans la revendication 1 où le procédé de conditionnement de fruits (F) dans des contenants souples (E) à fermer par soudure, lesdits contenants (E) étant préalablement remplis de fruits (F) et de jus (J) par une extrémité laissée ouverte dont les rebords doivent être soudés, consiste à mettre sous pression les parois dudit contenant (E) de sorte que le jus (J) soit présent au-delà des bords du contenant devant être soudés lors de l'opération de soudure, **CARACTÉRISÉ PAR LE FAIT QU'**il est souple, opaque, présentant des soudures (S) plates et formé d'un complexe polymères-aluminium comprenant les couches suivantes :
- extérieure de polyester,
- intermédiaire en aluminium ou matériau équivalent,
- intérieure de polyéthylène.

12. Emballage (E) obtenu selon le procédé décrit dans la revendication 1 où le procédé de conditionnement de fruits (F) dans des contenants souples (E) à fermer par soudure, lesdits contenants (E) étant préalablement remplis de fruits (F) et de jus (J) par une extrémité laissée ouverte dont les rebords doivent être soudés, consiste à mettre sous pression les parois dudit contenant (E) de sorte que le jus (J) soit présent au-delà des bords du contenant (C) devant être soudés lors de l'opération de soudure, **CARACTÉRISÉ PAR LE FAIT QU'**il est souple, transparent, présentant des soudures (S) plates et formé d'un complexe multicouche de polymères comprenant les couches suivantes :
- extérieure de polyamide,
- intermédiaire de polypropylène,
- intérieure de polyéthylène.
